# EUROPÄISCHE PATENTSCHRIFT

(11) **EP 1 269 029 B1**
(45) Veröffentlichungstag und Bekanntmachung des Hinweises auf die Patenterteilung: **05.05.2010**
(21) Anmeldenummer: 01943199.8
(22) Anmeldetag: 28.03.2001
(51) Int. Cl.: F16B 19/08

(54) **BLINDNIET, NIETDORN, HALTEEINRICHTUNG, VERFAHREN ZUR HERSTELLUNG EINES BLINDNIETS UND VERFAHREN ZUR DURCHFÜHRUNG EINER NIETVERBINDUNG**
BLIND RIVET, RIVET PIN, HOLDING DEVICE, METHOD FOR PRODUCING A BLIND RIVET AND METHOD FOR CREATING A RIVETED JOINT
RIVET AVEUGLE, POIN ON, DISPOSITIF DE FIXATION, PROCEDE PERMETTANT DE PRODUIRE UN RIVET AVEUGLE ET PROCEDE PERMETTANT DE REALISER UN ASSEMBLAGE RIVE

(30) Priorität: 29.03.2000 DE 10015447; 24.08.2000 DE 10041550
(43) Veröffentlichungstag der Anmeldung: 02.01.2003
(73) Patentinhaber: Adolf Würth GmbH & Co. KG, 74653 Künzelsau (DE)
(72) Erfinder: Wirth, Klaus, 06188 Landsberg (DE); Wirth, Martin, 06188 Landsberg (DE)
(74) Vertreter: Patentanwälte Ruff, Wilhelm, Beier, Dauster & Partner
(86) Internationale Anmeldenummer: PCT/EP2001/003533
(87) Internationale Veröffentlichungsnummer: WO 2001/073303

(56) Entgegenhaltungen:
- EP-A- 0 142 960
- EP-A- 0 578 275
- EP-A- 0 894 986
- US-A- 4 293 258

## Beschreibung

### Stand der Technik

Die Erfindung geht aus von einer Halteeinrichtung, und einem Verfahren zur Durchführung einer Nietverbindung.

Ein Blindniet (Hülsen-, Becher-Blindniet) wird zur Erzeugung einer unlösbaren Verbindung mehrerer Werkstücke eingesetzt, wobei zum Setzen des Niets nur eine Seite der Werkstücke zugänglich sein muß. In der Regel muß, bevor der Blindniet eingesetzt wird, ein Loch vorgebohrt werden. Diese Praxis erfordert aber einen zusätzlichen Arbeitsgang und ist außerdem zeitaufwendig.

Um diesen Zeitaufwand zu minimieren, wird ein Hülsen-Blindniet (G 93 02 633) mit einer Spitze verstehen, die es erlaubt, innerhalb eines Arbeitsganges mittels eines Gerätes die Werkstücke zu durchstoßen und den Blindniet zu verankern. Nachteilig ist hierbei, daß nur verhältnismäßig dünnwandige und weiche Plattenmaterialien durchstoßen werden können. Dies liegt einerseits im Blindniet-Herstellungsverfahren begründet, in dem die Spitze eines Blindniets in der Regel durch Massivumformung (Pressen) erzeugt wird. Dieses Verfahren führt aber nicht zu scharfkantigen, sondern eher zu abgerundeten Kanten der Spitzen, die somit die Werkstücke nur durchstoßen, nicht aber durchschneiden können. Andererseits ist das verwendete Material beispielsweise den für die Durchdringung härterer und/oder dickerer Werkstoffe notwendigen Stoßkräfte der Blindnictsetzmaschien nicht gewachsen.

Weiterhin bekannt ist ein Niet (DE 19652031), der zum Durchstoßen zweier plastisch verformbar ausgebildeter und aneinander anliegender dünnwandiger Bauteile ausgebildet ist.

Weiterhin bekannt ist eine Vorrichtung zur Herstellung einer Nietverbindung, bei der der Niet zwischen Spannbacken gehalten wird, die sich beim Eintreiben des Niets öffnen (WO99/65629).

Der Erfindung liegt die Aufgabe zu Grunde, eine Halteeinrichtung und ein Verfahren zum Setzen von Nieten zu schaffen, die Vorteile gegenüber dem Stand der Technik bieten.

Zur Lösung dieser Aufgabe schlägt die Erfindung eine Halteeinrichtung mit den Merkmalen des Anspruchs 1 und/oder ein Verfahren mit den Merkmalen des Anspruchs 3 vor. Weiterbildungen der Erfindung sind Gegenstand von Unteransprüchen.

Die erfindungsgemäße Halteeinrichtung eines Werkzeuges (schußapparat, Blindnietsetzgerät, odgl.) für die Fixierung eines Blindniets mit den Merkmalen des Anspruchs 1 hat gegenüber dem Stand der Technik den Vorteig, daß die Durchgangsöffnung der Halteeinrichtung einen Ring odgl. aufweist, durch dessen Öffnung der Blindniets ausgenommen werden kann.

Nach einer vorteilhaften Ausgestaltung ist der in die Halteeinrichtung integrierte Ring meist aus Gummi odgl. hergestellt und sich somit flexibel an verschiedene Blindnieten anpaßt, um diese vor dem Herausfallen beilspielsweise aus dem Schußapparat zu hindern.

Das erfindungsgemäße Verfahren zur Durchführung einer Nietverbindung, insbesondere mittels einer dafür geeigneten Vorrichtung (Schußapparat, Blindnietsetzgerät, odgl.), mit den Merkmalen des Anspruchs 3 sieht vor, daß die in Setzrichtung auf den Nietdorn wirkenden Kräfte des Werkzeuges (Schußapparat, Blindnietsetzgerät, odgl.), die das Durchbohren des Werkstückes bis zum Anschlag bewirken, mindestens teilweise in Richtung und entlang der Nietdommittelachse geleitet werden. Durch diese Kraftübertragung können auch härterer Werkstücke durchbohrt werden.

Nach einer vorteilhaften Ausgestaltung des erfindungsgemäßen Verfahrens übertrag ein Bolzen beispielsweise durch einen Schlag oder Stoß die auf den Nietdorn wirkende Kraft, die das Durchsetzten des Werkstückes ermöglicht.

Nach einer diesbezüglichen Ausgestaltung des erfindungsgemäßen Verfahrens ist der Bolzen auf der zum Nietdorn zugewandten Seite verjüngt mit einer Einbuchtung (Kalotte) und/oder mit einer sonstigen zur Zentrierung dienenden Ausgestaltung versehen.

Nach einer weiteren vorteilhaften Ausgestaltung des erfindungsgemäßen Verfahrens weist die Vorrichtung (Schußapparat, Blindnietsetzgerät) zur Fixierung des Nietkopfes eine Halteeinrichtung mit einem Ring aus Gummi odgl. auf. Durch Festklemmung des Nietkopfes mittels des Ringes wird ein Herausfallen des Blindniets aus der Vorrichtung verhindert.

Nach einer weiteren vorteilhaften Ausgestaltung des erfindungsgemäßen Verfahrens erfolgt das Durchbohren des Werkstücks als Schnitt. Dieses Schneiden erleichtert das Durchdringen der Werkstücke.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung und im Folgenden näher beschrieben. Es zeigen:
- Figur 1: eine Seitenansicht eines Becher-Blindniets mit Spitze,
- Figur 2: eine Schnittansicht des Becher-Blindniets mit Spitze aus Figur 1,
- Figur 3: eine räumliche Ansicht des Becher-Blindniets mit Spitze aus Figur 1,
- Figur 4: eine Seitenansicht eines Becher-Blindniets mit Spitze und Dichtring,
- Figur 5: eine Schnittansicht des Becher-Blindniets mit Spitze und Dichtring aus Figur 4,
- Figur 6: eine räumliche Ansicht des Becher-Blindniets mit Spitze und Dichtring aus Figur 4,
- Figur 7: eine Seitenansicht eines Hülsen-Blindniets mit angespitztem Nietdom,
- Figur 8: eine Schnittansicht des Hülsen-Blindniets mit angespitztem Nietdom aus Figur 7,
- Figur 9: eine Seitenansicht eines Hülsen-Blindniets mit angespitztem Nietdom und mit eingebuchtetem Domende und
- Figur 10: eine Schnittansicht eines Hülsen-Blindniets, der in einer Halteeinrichtung eines Schußapparates (nicht dargestellt) fixiert ist.

### Beschreibung des Ausführungsbeispiels

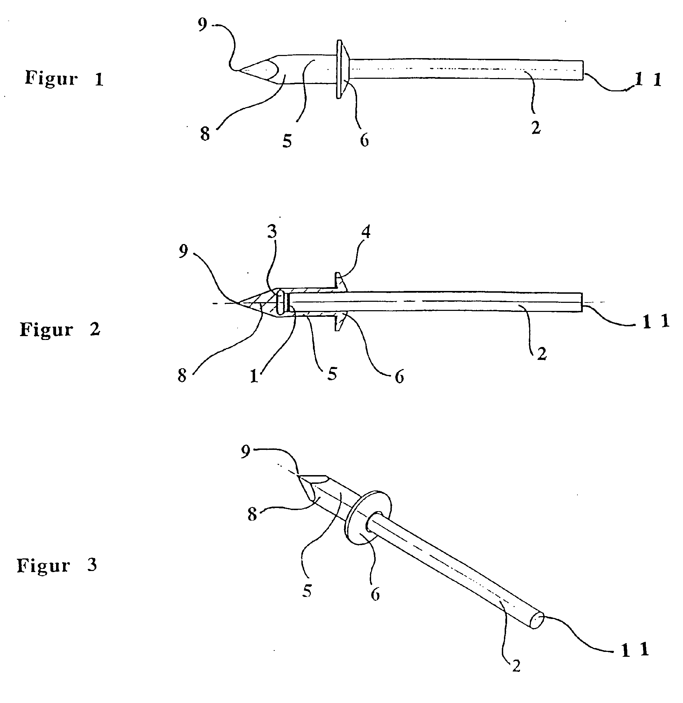

Der in der Figur 1 dargestellte Blindniet ist ein Becher-Blindniet und besteht im Wesentlichen aus einem Nietdom 2 und einem becherförmigen Nietschaft 5. Der Nietschaft 5 unterteilt sich in den Nietkopf 6 und einem Schließkopf 8. Das nietkopfabseitigen Ende des Nietschaftes 5 ist zu einer Spitze 9 ausgeformt. Diese ermöglicht das Durchstoßen von Werkstücken ohne das ein Vorbohren nötig ist. Durch einen anschließenden Zug des Nietdorns 2 in die, der Stoßrichtung entgegengesetzten, Richtung verformt sich der Nietschaft 5 und der Schließkopf 8 mit der Folge einer Verbindung der Werkstücke.

Diese Verformung wird bei einem Becher-Blindniet durch den in Figur 2 dargestellten Stangenkopf 3 hervorgerufen, der zum Verankern des Becher-Blindniets in Richtung Nietkopf 6 gezogen wird. Die Verbindung wird somit auf der einen Seite der zu verbindenden Werkstücke von der Verformung des Nietschaftes 5 und des Schließkopfes 8 und auf der anderen Seite der Werkstücke von dem Nietkopf 6, dessen Rand einen Nietkopfkragen 4 aufweist, hergestellt. Nachdem die Verbindung hergestellt ist, ermöglicht die Sollbruchstelle 1 ein Abtrennen des Nietdorns 2.

In Figur 3 ist eine räumliche Darstellung eines Becher-Blindniets dargestellt. In dieser ist das freie Ende des Nietdorns 2 sehr anschaulich als Flachrundkopf ausgebildet. Abhängig vom verwendeten Spezialwerkzeug (Schußapparat, Blindnietsetzgerät, odgl.) sind aber, um eine optimale Paßgenauigkeit zu erreichen, auch andere Ausformungen (Pyramide, Kegel, Einbuchtung, odgl.) des Domendes 11 möglich.

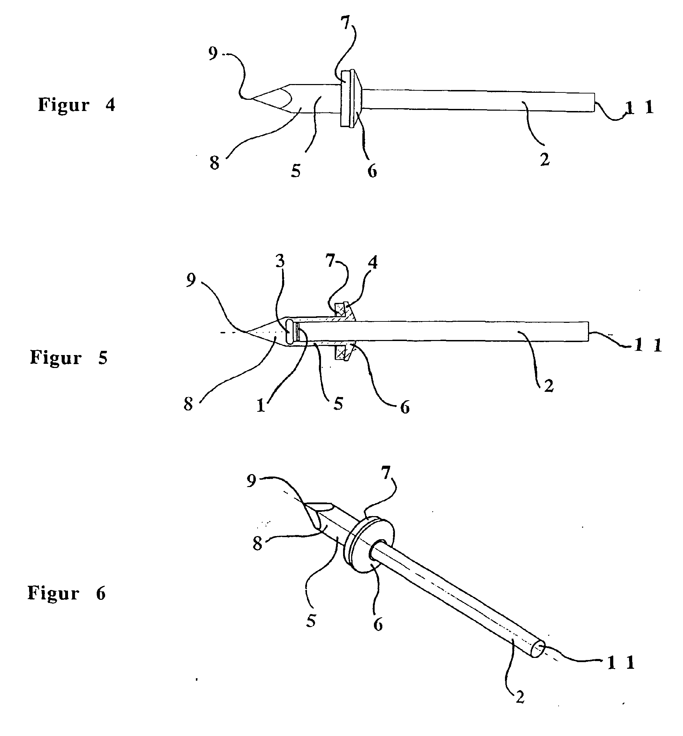

Das in den Figuren 4, 5 und 6 dargestellte Ausfiihrungsbeispiel eines Becher-Blindniets unterscheidet sich von dem in den Figuren 1, 2 und 3 dargestellten Ausfi.ihrungsbeispiel durch das Dichtelement 7, das nach der Verbindung bündig zwischen dem Werkstück und dem Nietkopf 6 liegt und somit eine flüssigkeits- und gasundurchlässige Abdichtung bewirkt.

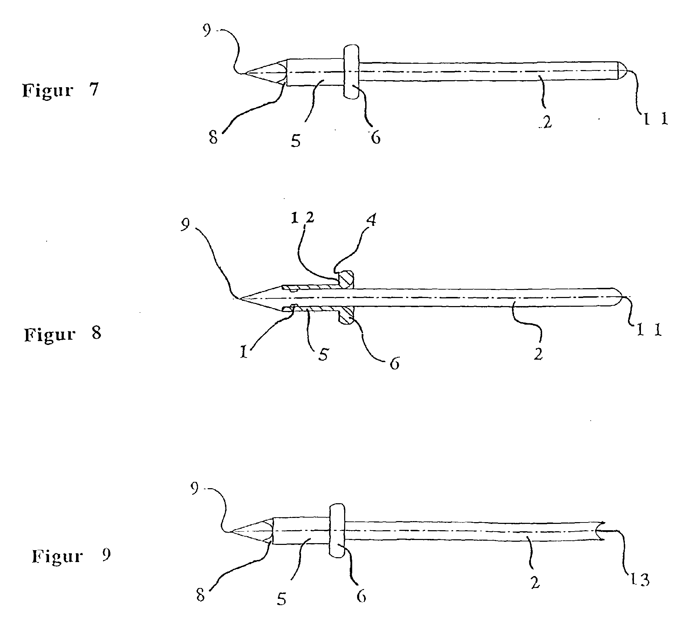

Der in der Figur 7 dargestellte Blindniet ist ein Hülsen-Blindniet und besteht im Wesentlichen aus einem Nietdom 2 und einer Niethülse. In diesem Fall ist der Nietdorn 2 zu einer Spitze 9 ausgeformt. Diese Spitze 9 ermöglicht das Durchstoßen von Werkstücken ohne das ein Vorbohren nötig ist. Durch einen anschließenden Zug des Nietdorns 2 in die, der Stoßrichtung entgegengesetzten, Richtung verformt sich der Nietschaft 5 und der Schließkopf 8 mit der Folge einer Verbindung der Werkstücke. Das Domende 11 ist abgerundet ausgeformt. Es sind aber auch, um eine optimale Anpassung an das zur Verarbeitung benutzte Werkzeug (Schußapparat, Blindnietsetzgerät, odgl.) zu erlangen, andere Ausformungen (Pyramide, Kegel, Einbuchtung, odgl.) des Domendes 11 möglich.

Die in Figur 8 dargestellte Unterschneidung 12 dient zur besseren Auflage des verarbeiteten Blindniets auf dem Werkstück. Diese Unterschneidung ist auch an Becher-Blindnieten denkbar.

Das in Figur 9 dargestellte Domende 11 ist kalottenförmig eingebuchtet. Es sind aber auch andere Einbuchtungen 13 des Domendes 11 möglich. Durch diese Ausführung wird beim Stoß oder Schlag des Bolzens auf das Dornende 11 die Kraft des Bolzens zentriert und in das Nietdorninnere geleitet.

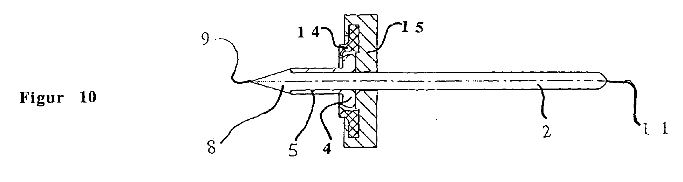

Figur 10 zeigt eine Schnittansicht eines Hülsen-Blindniets, der in einer Halteeinrichtung eines Schußapparates (nicht dargestellt) fixiert ist. Vorteilhaft ist die ballige, abgerundete Ausformung des Nietkopfkragens 4, die es ermöglicht die Öffnung des flexiblen und bevorzugt aus Gummi gefertigten Ringes 14 zu passieren, um sich dahinter festzuklemmen, so daß der Blindniet gegen Herausfallen gesichert ist. Durch die abgerundete Form des Nietkopfkragens 4 wird der Verschleiß am Ring 14 minimiert. Die ballige, abgerundete Ausformung des Nietkopfkragens 4 ist auch an einem Becher-Blindniet denkbar. Zur Fixierung des Blindniets in der Halteeinrichtung sind neben dem eine Öffnung blidenden Ringes 14 auch andere Ausgestaltungen, möglicherweise auch mehrere Bauteile denkbar.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Sollbruchstelle
- 2: Nietdom
- 3: Stangenkopf
- 4: Nietkopfkragen
- 5: Nietschaft
- 6: Nietkopf
- 7: Dichtelement
- 8: Schließkopf
- 9: Spitze
- 11: Domende
- 12: Unterschneidung
- 13: Einbuchtung
- 14: Ring
- 15: Teil des Schußapparates

## Patentansprüche

1. Halteeinrichtung eines Werkzeuges für die Fixierung eines aus einem eine Sollbruchstelle (1) aufweisenden Nietdorn (2), einem Nietkopf (6) und einem becher- oder hülsenförmig ausgebildeten Nietschaft (5), einem auf der Sollbruchstellenseite des Nietdorns (2) befindlichen Stangenkopf (3) und einem Nietkopfkragen (4) zur Anlage an ein Werkstück bestehenden Blindniets, mit einer Durchgangsöffnung zur Aufnahme des Blindniets, **dadurch gekennzeichnet, dass** in der Durchgangsöffnung ein mit einer den Blindniet aufnehmenden Öffnung versehener Ring (14) angeordnet ist.

2. Halteeinrichtung, nach Anspruch 1, **dadurch gekennzeichnet, dass** der Ring (14) aus Gummi o. dgl. besteht.

3. Verfahren zum Setzen eines aus einem eine Sollbruchstelle (1) aufweisenden Nietdom (2), einem Nietkopf (ó) und einem becher- oder hülsenförmig ausgebildeten Nietschaft (5), einem auf der Sollbruchstellenseite des Nietdorns (2) befindlichen Stangenkopf (3) und einem Nietkopfkragen (4) zur Anlage an ein Werkstück bestehenden Blindnietes, mittels einer dafür geeigneten Vorrichtung, durch die die auf den Nietdom (2) in Setzrichtung wirkenden Kräfte der Vorrichtung, mindestens teilweise in Richtung und entlang der Nietdornmittelachse geleitet werden, so dass der angetriebene Blindniet nietschaftseitig voran ein oder mehrere zu verbindende Werkstücke bis zum Anschlag durchbohrt, um dann im nächsten Verfahrensschritt bei gleichzeitiger Gegenhaltung des Nietkopfes (6) den Nietdom (2) entgegen der Setzrichtung zu ziehen, wobei sich, bis zur Abtrennung des Nietdorns (2) aufgrund der Überschreitung der für die Sollbruchstelle (1) vorgegebenen Kraft, auf der dem Nietkopf (6) gegenüberliegenden Seite des Nietschaftes (5) eine verbindungsschaffende Aufweitung bildet,
**dadurch gekennzeichnet, dass**
der Nietkopf (6) in einer Halteeinrichtung nach Anspruch 1 oder 2 geführt wird, die den Blindniet elastisch festhält.

4. Verfahren nach Anspruch 3 **dadurch gekennzeichnet, dass** die auf den Nietdom (2) wirkende Kraft, die das Durchsetzen des Werkstücks bewirkt, durch einen Bolzen auf den Nietdorn (2) übertragen wird.

5. Verfahren nach einem der Ansprüche 3 oder 4, **dadurch gekennzeichnet, dass** sich der Bolzen auf der zum Nietdorn (2) zugewandten Seite verjüngt, mit einer Einbuchtung versehen ist und/oder eine sonstige zur Zentrierung dienende Ausgestaltung aufweist.

6. Verfahren nach einem der Ansprüche 3 bis 5, **dadurch gekennzeichnet, dass** das Durchbohren des Werkstückes als Schnitt erfolgt.

## Claims

1. A holding device of a tool for fixing a blind rivet comprising a rivet pin (2) featuring a predetermined breaking point (1), a rivet head (6) and a cup- or sleeve-shaped rivet shank (5), a pin head (3) at the predetermined breaking point of the rivet pin (2) and a rivet head collar (4) for supporting it on a workpiece, with a through opening for receiving the blind rivet, **characterised in that** a ring (14) provided with an opening is disposed inside the through opening accommodating the blind rivet.

2. The holding device according to Claim 1 **characterised in that** the ring (14) is made of rubber or something similar.

3. A process for fixing a blind rivet comprising a rivet pin (2) featuring a predetermined breaking point (1), a rivet head (6) and a cup- or sleeve-shaped rivet shank (5), a pin head (3) at the predetermined breaking point of the rivet pin (2) and a rivet head collar (4) for support on a workpiece, by means of a suitable apparatus through which the forces of the apparatus acting on the rivet pin (2) in the fixing direction are guided at least partially in direction and along the middle axis of the rivet pin so that the blind rivet driven on the rivet shank side bores through one or several workpieces to be connected up to the limit stop in order for it in the next process step, by concurrently supporting the rivet head (6), to pull the rivet pin (2) in the direction opposite the fixing direction, wherein, until separation of the rivet pin (2) by exceeding the default force for the predetermined breaking point (1), on the rivet shank (5) side opposite the rivet head (6), deformation that causes the connection forms, **characterised in that** the rivet head (6) is guided in a holding device, according to Claim 1 or 2, which holds the blind rivet firmly and elastically.

4. The process according to Claim 3 **characterised in that** the force, acting on the rivet pin (2), which causes the workpiece to be penetrated, is transmitted by a bolt onto the rivet pin (2).

5. The process according to one of Claim 3 or 4 **characterised in that** the bolt is tapered on the side facing the rivet pin (2), and is provided with a waist and/or features an embodiment for centring.

6. The process according to one of Claims 3 to 5 **characterised in that** boring of the workpiece takes place by cutting.

## Revendications

1. Dispositif de retenue, équipant un outil, destiné à immobiliser un rivet aveugle composé d'une pointe (2) de rivet présentant une zone de rupture programmée (1), d'une tête (6) de rivet et une d'une tige (5) de rivet conformée en gobelet ou en douille, d'une tête (3) de tige située sur le côté de la zone de rupture programmée de la pointe de (2) du rivet, et d'un collet (4) de tête de rivet permettant l'application contre une pièce, avec un orifice de passage servant à recevoir le rivet aveugle, **caractérisé en ce qu'**est agencée dans l'orifice de passage une bague (14) présentant un orifice destiné à recevoir le rivet aveugle.

2. Dispositif de retenue selon la revendication 1, **caractérisé en ce que** la bague (14) est en caoutchouc ou assimilé.

3. Procédé pour poser un rivet aveugle composé d'une pointe (2) de rivet présentant une zone de rupture programmée (1), d'une tête (6) de rivet et d'une tige (5) de rivet conformée en gobelet ou en douille, d'une tête (3) de rivet se trouvant sur le côté de la zone de rupture programmée de la pointe (2) du rivet, et d'un collet (4) de tête de rivet permettant l'applique contre une pièce, au moyen d'un dispositif adapté à ce procédé, dispositif par lequel les forces agissant sur la pointe (2) du rivet dans le sens de la pose sont guidées au moins en partie en direction et le long de l'axe médian de la pointe du rivet de sorte que le rivet aveugle entraîné transperce, par son côté tige en avant et jusqu'à la butée, une ou plusieurs pièces à relier ensemble pour ensuite, au cours de l'étape suivante du procédé avec retenue antagoniste simultanée de la tête (6) du rivet, tirer la pointe (2) du rivet dans la direction opposée à celle de la pose sachant que, jusqu'au sectionnement de la pointe (2) du rivet en raison du dépassement de la force spécifiée pour la zone de rupture programmée (1), une expansion du rivet génératrice de la jonction se produit sur le côté de la tige (5) situé en face de la tête (6) du rivet,
**caractérisé en ce que**
la tête (6) du rivet est guidée dans un dispositif de retenue selon la revendication 1 ou 2 qui retient élastiquement le rivet aveugle.

4. Procédé selon la revendication 3, **caractérisé en ce que** la force agissant sur la pointe (2) de rivet et provoquant le passage à travers la pièce, est communiqué par un goujon à la pointe (2) du rivet.

5. Procédé selon l'une des revendications 3 ou 4, **caractérisé en ce que** le goujon se rétrécit sur le côté tourné vers la pointe (2) du rivet, qu'il est doté d'un creux et/ou qu'il présente une autre géométrie quelconque destinée au centrage.

6. Procédé selon l'une des revendications 3 à 5, **caractérisé en ce que** le perçage de la pièce a lieu sous forme de coupe.
